# EUROPÄISCHE PATENTSCHRIFT

(11) **EP 1 224 234 B1**
(45) Veröffentlichungstag und Bekanntmachung des Hinweises auf die Patenterteilung: **30.01.2008**
(21) Anmeldenummer: 00966089.5
(22) Anmeldetag: 29.09.2000
(51) Int. Cl.: C08G 18/67, C08G 18/80, C09D 175/16

(54) **MIT UV-STRAHLUNG UND THERMISCH HÄRTBARE WÄSSRIGE POLYURETHANDISPERSIONEN SOWIE DEREN VERWENDUNG**
AQUEOUS POLYURETHANE DISPERSIONS WHICH CAN BE HARDENED WITH UV-RADIATION AND THERMALLY, AND USE THEREOF
DISPERSIONS DE POLYURETHANNE AQUEUSES DURCISSABLES PAR DES RAYONS ULTRAVIOLET ET PAR VOIE THERMIQUE ET LEUR UTILISATION

(30) Priorität: 30.09.1999 DE 19947054; 12.07.2000 DE 10033697
(43) Veröffentlichungstag der Anmeldung: 24.07.2002
(73) Patentinhaber: BASF Aktiengesellschaft, 67056 Ludwigshafen (DE)
(72) Erfinder: SCHWALM, Reinhold, 67157 Wachenheim (DE); PAULUS, Wolfgang, 55270 Ober-Olm (DE); MEISENBURG, Uwe, 47051 Duisburg (DE); BECK, Erich, 68526 Ladenburg (DE); BRUCHMANN, Bernd, 67251 Freinsheim (DE); SCHROF, Wolfgang, 67271 Neuleiningen (DE); VÖLLINGER, Frank, 67480 Edenkoben (DE)
(74) Vertreter: Kinzebach, Werner
(86) Internationale Anmeldenummer: PCT/EP2000/009559
(87) Internationale Veröffentlichungsnummer: WO 2001/023453

(56) Entgegenhaltungen:
- EP-A- 0 098 752
- EP-A- 0 902 040
- DE-A- 19 860 041
- FR-A- 2 607 820

## Beschreibung

Die Erfindung betrifft mit UV-Strahlung und thermisch härtbare Polyurethandispersionen, die mit UV-Strahlung polymerisierbare C=C-Doppelbindungen, Hydroxylgruppen und blockierte Isocyanatgruppen in einem Molekül oder die blockierten Isocyanatgruppen in zugemischten Verbindungen aufweisen sowie Verfahren zu deren Herstellung und Anwendung.

Strahlenhärtbare Polyurethandispersionen sind z. B. aus der DE-A 4434554 der Anmelderin bekannt und werden aus Polyisocyanaten, hydroxylgruppenhaltigen Polyestern, Verbindungen mit einer gegenüber Isocyanaten reaktiven Gruppe und einer Säuregruppe und Verbindungen mit einer gegenüber Isocyanaten reaktiven Gruppe und C=C-Doppelbindungen hergestellt. Die Produkte lassen jedoch bzgl. ihrer Verarbeitbarkeit noch Wünsche offen. Die US-A 5,859135 beschreibt wässrige Beschichtungsmischungen mit einem lipophilen Polymeren mit mindestens einer Hydroxylgruppe und einem Molekulargewicht von bis zu 100000, das einerseits mit einer vernetzbaren funktionellen Gruppe, andererseits über ein Polyisocyanat mit einer Gruppierung mit Carboxylgruppen sowie mit einem hydrophilen Polyalkylenoxidmonoether-Rest verbunden ist.

Nachteilig ist, dass damit hergestellte Beschichtungen auch nach der Verarbeitung eine relativ hohe eigene Hydrophilie aufweisen. Die US-A 5,296,529 beschreibt ein selbstvernetzendes Harz mit Carboxylgruppen, Hydroxylgruppen und verkappten Isocyanatgruppen, das aus a) einem Copolymerisat eines Vinylmonomeren mit freien und verkappten Isocyanatgruppen mit einem Styrol- und/oder (Meth)acrylat-Comonomeren und b) einem Hydroxylgruppen und Carboxylgruppen enthaltenden Polyesterharz hergestellt wird, wobei einige Hydroxylgruppen des Polyesterharzes mit einigen freien Isocyanatgruppen des vinylcopolymerisats umgesetzt und danach restliche Isocyanatgruppen verkappt werden. Es ist ersichtlich, dass einer gut reproduzierbaren Produktion des Systems das Risiko einer vorzeitigen ungewünschten Vernetzung der beiden Polymeren entgegensteht. Auch enthält das beschriebene System keine mit UV-Strahlung härtbaren Doppelbindungen und beschreibt auch keine Strahlenhärtung derselben. Die DE-A-198 60 041 beschreibt Umsetzungsprodukte von a) Polyisocyanaten und b) niedrigmolekularen Hydroxylverbindungen mit C=C-Doppelbindungen wie Hydroxyalkyl(meth)acrylaten oder Hydroxyalkylvinylethern, die zum größten Teil Allophanate der Polyisocya-nate mit den ungesättigten Alkoholen darstellen. Die niedrigmolekularen und niedrigviskosen Reaktionsprodukte weisen im Molekül einen hohen Gehalt an polymerisierbaren C=C-Doppelbindungen auf und lassen sich sowohl mit UV-Strahlen polymerisieren als auch unter Mitwirkung der Isocyanatgruppen thermisch oder durch Einwirkung von Wasserdampf, Ammoniak oder Aminen härten. Eine Anwendung in Form von wässrigen Dispersionen ist nicht beschrieben.

Der vorliegenden Erfindung lag die Aufgabe zugrunde, mit UV-Strahlung und auch thermisch härtbare wässrige Polyurethandispersionen herzustellen, die Beschichtungen mit guter Chemikalienfestigkeit und guten mechanischen Eigenschaften ergeben, insbesondere eine hohe Kratzfestigkeit aufweisen und nach der Behandlung auch an unbelichteten Stellen physikalisch trocknen und für Außenanwendungen wie für eine Automobillackierung geeignet sind.

Es wurde nun gefunden, dass die Aufgabe durch mit UV-Strahlung sowie thermisch härtbare Polyurethandispersionen gelöst werden kann, die im Wesentlichen aufgebaut sind aus
a) aliphatischen Polyisocyanaten mit einer NCO-Funktionalität von 2 bis 4,5,
b) Verbindungen mit mindestens einer gegenüber Isocyanat reaktiven Gruppe sowie mindestens einer in Gegenwart eines Photoinitiators mit UV-Strahlung polymerisierbaren C=C-Doppelbindung,
c) aliphatischen und/oder cycloaliphatischen Verbindungen mit mindestens zwei Hydroxylgruppen mit einem Molekulargewicht von unter 500 g/mol,
d) Verbindungen mit mindestens einer gegenüber Isocyanat reaktiven Gruppe sowie mindestens einer carboxylgruppe oder Sulfonsäuregruppe,
e) mindestens einer basischen Verbindung für eine Neutralisation oder Teilneutralisation der Säuregruppen der Verbindungen d),
f) einem Isocyanat-Blockierungsmittel (oder Verkappungsmittel) (f1), das Isocyanatgruppen in blockierte (verkappte) Isocyanatgruppen mit einer Deblockierungstemperatur im Bereich von 70 bis 160 °C umwandelt, oder Zusatz einer Verbindung (f2), die blockierte Isocyanatgruppen aufweist, sowie
g) gegebenenfalls weiteren von den Verbindungen b) bis f) verschiedenen Verbindungen, die nur eine gegenüber Isocyanat reaktive Gruppe aufweisten,
wobei die mit einem stöchiometrischen Überschuss an NCO-Gruppen im Verhältnis zu den OH-Gruppen hergestellten Reaktionsprodukte von a) mit b) und gegebenenfalls c) mit zur Dispergierbarkeit in wässrigem Medium hinreichenden Mengen an Verbindungen d) und e) umgesetzt und durch Reaktion mit Isocyanat-Blockierungsmitteln (f1) blockierte Isocyanatgruppen in das Molekül eingeführt oder Verbindungen (f2), die blockierte Isocyanatgruppen enthalten, zugegeben wurden.

Zu den Bausteinen der Polyurethandispersion:

### Komponente a)

Als aliphatische Polyisocyanate a) mit einer NCO-runktionalität von 2 bis 4,5 und bevorzugt 2,0 bis 3,5 kommen als aliphatische (einschließlich cycloaliphatische) Diisocyanate insbesondere in Frage Hexamethylendiisocyanat, 1,3- und 1,4-Bis(isocyanatomethyl)cyclohexan, Isophorondiisocyanat und Di(isocyanatocyclohexyl)methan- Bevorzugt sind Polyisocyanate mit einer Funktionalität von mindestens 3 wie Isocyanuratgruppen, Biuretgruppen, Uretdiongruppen oder Urethan- und/oder Allophanatgruppen aufweisende Polyisocyanate. Bei den Isocyanuratgruppen aufweisenden Polyisocyanaten handelt es sich insbesondere um einfache Trisisocyanatoisocyanurate, welche cyclische Trimere der Diisocyanate darstellen, oder um Gemische mit ihren höheren, mehr als einen Isocyanuratring aufweisenden Homologen- Die Isocyanatoisocyanurate haben im Allgemeinen einen NCO-Gehalt von 10 bis 30, insbesondere 15 bis 25 Gew.-% und eine mittlere NCO-runktionalität von 3 bis 4,5. Biuretgruppen aufweisende Polyisocyanate sind Additionsprodukte von 3 Molekülen Diisocyanat mit 1 Molekül Wasser und weisen insbesondere einen NCO-Gehalt von 18 bis 22 Gew.-% und eine mittlere NCO-Funktionalität von 3 bis 4,5 auf - Urethan- und/oder Allophanatgruppen aufweisende Polyisocyanate können z. B. durch Umsetzung von überschüssigen Mengen an Diisocyanat mit einfachen Alkoholen wie z. B. Trimethylolpropan, Glycerin, 1,2-Dihydroxypropan oder deren Gemischen erhalten werden und haben im Allgemeinen einen NCO-Gehalt von 12 bis 20 Gew.-% und eine mittlere NCO-Funktionalität von 2,5 bis 3. Als Polyisocyanate mit einer NCO-Funktionalität über 2 seien auch die Addukte von 3 Mol Diisocyanaten wie Isophorondiisocyanat an dreiwertige Alkohole wie an Trimethylolpropan genannt.

Bevorzugt umfasst die Komponente a) wenigstens eine Verbindung Va) mit zwei freien Isocyanatgruppen, mindestens einer Allophanatgruppe und mindestens einer radikalisch polymerisierbaren C=C-Doppelbindung, wobei direkt an die Doppelbindung eine Carbonylgruppe oder ein Sauerstoffatom in Etherfunktion gebunden ist.

Vorzugsweise ist die Verbindung Va) ausgewählt unter Verbindungen der allgemeinen Formel I 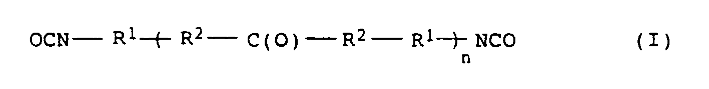 worin
- n: für eine ganze Zahl von 1 bis 10 steht,
- R¹: für eine zweiwertige aliphatische oder alicyclische C₂- bis C₂₀-Kohlenwasserstoffeinheit oder eine aromatische C₆- bis C₂₀-Kohlenwasserstoffeinheit steht,
- R²: in jeder Wiederholungseinheit einmal für -NH- und einmal für 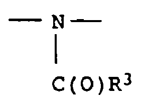
steht, wobei R³ für einen von einem Alkohol A durch Abstraktion des H-Atoms von der alkoholischen Hydroxylgruppe abgeleiteten Rest steht, wobei der Alkohol A zusätzlich wenigstens eine radikalisch polymerisierbare C=C-Doppelbindung aufweist und wobei direkt an die Doppelbindung eine Carbonylgruppe oder ein Sauerstoffatom in Etherbindung gebunden ist.

Bei den Resten R¹ handelt es sich bevorzugt um solche, die sich durch Abstraktion der Isocyanatgruppe von üblichen aliphatischen oder aromatischen Polyisocyanaten ableiten. Bei den Diisocyanaten handelt es sich bevorzugt um aliphatische Isocyanate mit 4 bis 20 C-Atomen. Beispiele für übliche Diisocyanate sind aliphatische Diisocyanate wie Tetramethylendiisocyanat, Hexylmethylendiisocyanat, Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, cycloaliphatische Diisocyanate wie 1,4-, 1,3- oder 1,2-Diisocyanatocyclohexan, 4,4'- oder 2,4'-Di(isocyanatocyclohexyl)methan, Isophorondiisocyanat, 1,3- oder 1,4-Bis-(isocyanatomethyl)cyclohexan, 2,4-, und 2,6-Diisocyanato-1-methylcyclohexan sowie aromatische Diisocyanate wie 2,4- oder 2,6-Toluylendiisocyanat, m- oder p-Xylylendiisocyanat, 2,4'- oder 4,4'-Diisocyanatodiphenylmethan, 1,3-oder 1,4-Phenylendiisocyanat, 1-Chlor-2,4-phenylendiisocyanat, 1,5-Naphthylendiisocyanat, Diphenylen-4,4'-diisocyanat, 4,4'Diisocyanato-3,3'-dimethyldiphenyldiisocyanat, 3-Methyldiphenylmethan-4,4'-diisocyanat und Diphenylether-4,4'-diisocyanat. Es können Gemische der genannten Diisocyanate vorliegen. Bevorzugt sind Hexamethylendiisocyanat, 1,3-Bis(isocyanatomethyl)cyclohexan, Isophorondiisocyanat, Tetramethylxylylendiisocyanat und Di(isocyanatocyclohexyl)methan.

Bei den Alkoholen A, von denen sich der Rest R³ ableitet, handelt es sich z. B. um Ester aus α,β-ungesättigten Carbonsäuren, wie Acrylsäure, Methacrylsäure (im Folgenden kurz "(Meth)Acrylsäure"), Crotonsäure, Acrylamidglykolsäure, Methacrylamidoglykolsäure oder Vinylessigsäure und Polyolen mit vorzugsweise 2 bis 20 C-Atomen und wenigstens 2 Hydroxylgruppen, wie Ethylenglykol, Diethylenglykol, Triethylenglykol, 1,2-Propylenglykol, 1,3-Propylenglykol, Dipropylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit und Sorbit, sofern der Ester wenigstens eine, gegenüber Isocyanat reaktive OH-Gruppe aufweist. Weiterhin können sich die Reste R³ auch von den Amiden der (Meth)-Acrylsäure mit Aminoalkoholen z. B. 2-Aminoethanol, 3-Amino-1-propanol, 1-Amino-2-propanol oder 2-(2-Aminoethoxy)ethanol und den Vinylethern der vorgenannten Polyole ableiten, sofern sie noch eine freie OH-Gruppe aufweisen.

Weiterhin sind auch ungesättigte Polyether- oder Polyesterole oder Polyacrylatpolyole mit einer mittleren OH-Funktionalität von 2 bis 10 als Reaktivkomponenten geeignet.

Bevorzugt leiten sich die Reste R³ von Alkoholen wie 2-Hydroxyethyl(meth)acrylat, Hydroxypropyl(meth)acrylat, 1,4-Butandiolmono(meth)acrylat, Neopentylglykolmono(meth)acrylat, Glycerinmono- und -di(meth)acrylat, Trimethylolpropanmono- und -di(meth)-acrylat, Pentaerythritdi- und -tri(meth)acrylat ab. Besonders bevorzugt ist der Alkohol A ausgewählt aus 2-Hydroxyethylacrylat, 2-Hydroxyethylmethacrylat, Hydroxypropyl(meth)acrylat. Beispiele für Amide ethylenisch ungesättigter Carbonsäuren mit Aminoalkoholen sind Hydroxyalkyl(meth)acrylamide wie N-Hydroxymethyl(meth)-acrylamid, N-Hydroxyethyl(meth)acrylamid, 5-Hydroxy-3-oxo-pentyl(meth)acrylamid, N-Hydroxyalkylcrotonamide wie N-Hydroxymethylcrotonamid oder N-Hydroxyalkylmaleinimide wie N-Hydroxyethylmaleinimid.

Insbesondere umfasst die Komponente a) wenigstens eine Verbindung Va) und wenigstens ein weiteres, davon verschiedenes aliphatisches oder araliphatisches Polyisocyanat. Bevorzugte weitere Polyisocyanate sind Polyisocyanate mit einer NCO-Funktionalität von 2 bis 4,5, besonders bevorzugt 2 bis 3,5. Bevorzugt werden aliphatische, cycloaliphatische und araliphatische Diisocyanate eingesetzt. Dazu zählen z. B. Tetramethylendiisocyanat, Hexamethylendiisocyanat, 2,3,3-Trimethylhexamethylendiisocyanat, 1,4-Cyclohexylendiisocyanat, Isophorondiisocyanat, 1,3- und 1,4-Bis(isocyanatomethyl)cyclohexan, Di(isocyanatocyclohexyl)methan, Tetramethylxylylendiisocyanat und Mischungen davon. Bevorzugt sind Polyisocyanate, die neben zwei oder mehreren Isocyanatgruppen noch eine Gruppe, ausgewählt aus der Gruppe der Urethan-, Harnstoff-, Biureth-, Allophanat-, Carbodiimid-, Uretonimin-, Uretdion- und Isocyanuratgruppen aufweisen. Bevorzugt werden als weitere Polyisocyanate Isophorondiisocyanat, 1,3- und 1,4-Bis(isocyanatomethyl)cyclohexan, deren Isocyanurate, Biurete und Allophanate und Mischungen davon eingesetzt.

Besonders bevorzugte Polyisocyanate als Ausgangsstoffe für die Herstellung der erfindungsgemäßen härtbaren Polyurethandispersionen sind Allophanatgruppen aufweisende Polyisocyanate des Hexamethylendiisocyanats oder des Isophorondiisocyanats mit den C=C-Gruppierungen enthaltenden Hydroxylverbindungen b), wie sie in der DE-A-198 60 041 beschrieben sind und ganz besonders die entsprechenden Umsetzungsprodukte der Polyisocyanate mit den Hydroxyalkyl(meth)acrylaten.

### Komponente b)

Die Verbindungen der Komponente b) weisen allgemein eine radikalische polymerisierbare C=C-Doppelbindung sowie mindestens eine weitere gegenüber Isocyanatgruppen reaktive Gruppe auf. Bevorzugte Verbindungen der Komponenten b) sind z. B. die Monoester zwei- oder mehrwertiger Alkohole mit α,β-ethylenisch ungesättigen Mono- und/oder Dicarbonsäuren und deren Anhydriden. Als α,β-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc. eingesetzt werden. Bevorzugt werden Acrylsäure und Methacrylsäure eingesetzt. Geeignete Alkohole sind z. B. Diole wie Glykole, bevorzugt Glykole mit 2 bis zu 25 Kohlenstoffatomen, wie z. B. 1,2-Ethandiol, 1,3-Propandiol, 1,4-Butandiol, 1,3-Butandiol, 1,5-Pentandiol, 1,4-Pentandiol, 1,6-Hexandiol, 1,10-Decandiol, Diethylenglykol, etc. Geeignete Triole und Polyole weisen z. B. 3 bis 25, bevorzugt 3 bis 18 Kohlenstoffatome auf. Dazu zählen z. B. Glycerin, Trimethylolpropan, Erythrit, Pentaerythrit, Sorbit etc. Vorzugsweise sind die Verbindungen der Komponente b) ausgewählt unter 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmonoacrylat und Mischungen davon. Gewünschtenfalls können diese Verbindungen auch noch durch Umsetzung mit einem geeigneten Kettenverlängerer, wie z. B. einem mehrfunktionellen Isocyanat oder einer mehrfunktionellen Carbonsäure, kettenverlängert sein.

Geeignete Verbindungen b) sind weiterhin die Ester und Amide von Aminoalkoholen mit den zuvor genannten α,β-ethylenisch ungesättigten Mono- und/oder Dicarbonsäuren, Hydroxyalkylvinylether wie Hydroxybutylvinylether etc.

Als Verbindungen b) mit mindestens einer gegenüber Isocyanaten reaktiven Gruppe sowie mindestens einer in Gegenwart eines Photoinitiators mit UV-Strahlung polymerisierbaren C=C-Doppelbindung kommen vor allem Methacrylsäuremonoester und Acrylsäuremonoester von aliphatischen Diolen sowie Methacrylamide und Acrylsäureamide von Aminoalkoholen in Frage, ferner Hydroxyalkylvinylether wie Hydroxybutylvinylether in Frage, von denen Hydroxyalkylacrylate mit 2 bis 4 C-Atomen im Alkylrest wie 2-Hydroxyethylacrylat bevorzugt sind, bei denen die benachbarte Carbonyl- oder Ethergruppe zur Aktivierung der C=C-Doppelbindung beiträgt.

### Komponente c)

Bei der Polyurethanherstellung werden mit Vorteil weitere aliphatische Verbindungen c) mit mindestens zwei mit Isocyanatgruppen reagierenden Hydroxylgruppen mit einem Molekulargewicht von unter 500 g/mol mitverwendet. Hierfür kommen insbesondere hydrolysestabile kurzkettige Diole in Frage wie Dihydroxymethylcyclohexan, Bis(hydroxycyclohexyl)propan, Tetramethylcyclobutandiol, Cyclooctandiol oder Norbornandiol. Bevorzugt werden Kohlenwasserstoffdiole mit einer C-Zahl von 6 bis 20 mitverwendet, wie Hexandiol, Octandiol, Decandiol oder Dodecandiol.

Eine Mitverwendung von mehrfunktionellen Alkoholen, Aminoalkoholen oder Thioalkoholen kann aber auch zur Einführung von mit Isocyanaten reagierenden funktionellen Gruppen vor der Endaushärtung dienen, wenn dabei die Stöchiometrie so gewählt wird, dass bei Reaktionen vor der Endaushärtung statistisch nur wenige der gegenüber Isocyanat reaktiven Gruppen reagieren. Zur Beschleunigung der Reaktion der Polyisocyanate können die üblichen Katalysatoren wie Dibutylzinndilaurat, Zinn(II)octoat oder Diazabicyclo-(2,2,2)octan mit verwendet werden. Bei der Herstellung von Allophanaten der Polyisocyanate mit den ungesättigten Alkoholen bei Temperaturen von 20 bis 280 °C ist die Gegenwart von die Allophanatbildung fördernden Katalysatoren vorteilhaft, wie von Zinkorganischen Verbindungen oder Tetraalkylammoniumverbindungen. Bezüglich der Herstellung der Allophanate sei erneut auf die Ausführungen in der DE-A-198 60 041 verwiesen.

### Komponente d)

Als Verbindungen d) mit mindestens einer gegenüber Isocyanat reaktiven Gruppe sowie mindestens einer Carbonsäure- oder Sulfonsäuregruppe kommen insbesondere aliphatische Monomercapto-, Monohydroxy- und Monoamino- und Iminocarbonsäuren und entsprechende Sulfonsäuren in Frage wie Mercaptoessigsäure (Thioglykolsäure), Mercaptopropionsäure, Mercaptobernsteinsäure, Hydroxyessigsäure, Hydroxypivalinsäure, Dimethylolpropionsäure, Hydroxydecansäure, Hydroxydodecansäure, 12-Hydroxystearinsäure, Hydroxyethansulfonsäure, Hydroxypropansulfonsäure, Mercaptoethansulfonsäure, Mercaptopropansulfonsäure, Aminopropansulfonsäure, Glycin (Aminoessigsäure) oder Iminodiessigsäure.

### Komponente e)

Als basische Verbindungen e) für eine Neutralisation oder Teilneutralisation der Säuregruppen der Verbindungen kommen anorganische und organische Basen wie Alkali- und Erdalkalihydroxide, -oxide, -carbonate, -hydrogencarbonate sowie Ammoniak oder primäre, sekundäre oder tert. Amine in Betracht. Bevorzugt ist die Neutralisation oder Teilneutralisation mit Aminen wie mit Ethanolamin oder Diethanolamin und insbesondere mit tert. Aminen, wie Triethylamin, Triethanolamin, Dimethylethanolamin oder Diethylethanolamin. Die Mengen an eingeführten chemisch gebundenen Säuregruppen und das Ausmaß der Neutralisation der Säuregruppen (das meist bei 40 bis 100 % der Äquivalenzbasis beträgt) soll hinreichend sein, um eine Dispergierung der Polyurethane in einem wässrigen Medium sicherzustellen, was dem Fachmann geläufig ist.

### Komponente f)

Als Blockierungsmittel für Isocyanatgruppen (f1) sind Verbindungen geeignet, die die Isocyanatgruppen in blockierte (verkappte) Isocyanatgruppierungen umwandeln, die dann unterhalb ihrer Deblockierungstemperatur nicht die üblichen Reaktionen einer freien Isocyanatgruppe zeigen. Beim Erhitzen der blockierten Isocyanatgruppen auf eine Temperatur, die mindestens der Deblockierungstemperatur entspricht, welche für die Zwecke dieser Erfindung im Bereich von 70 bis 160 °C liegen soll, werden die Isocyanatgruppen wieder freigesetzt und sind für übliche Isocyanatreaktionen, z. B. für Reaktionen mit funktionellen Gruppen wie z. B. Hydroxyl-, Mercapto- oder Aminogruppen zugänglich. Verbindungen, die Isocyanatgruppen blockieren (verkappen oder schützen), sind in der Literatur vielfach beschrieben (vgl. z. B. Z. W. Wicks, Prog. Org. Coat. 3(1975) 73-99 sowie 9(1981) 3-28 oder Houben-Weyl, Methoden der Organischen Chemie Bd. XIV/2, S. 61 ff., Georg Thieme Verlag, Stuttgart 1963). Als Blockierungsmittel von Isocyanatgruppen (f1) seien genannt Phenole, Caprolactam, Imidazole, Pyrazole, Pyrazolinone, 1,2,4-Triazole, Diketopiperazine, Malonsäureester und Oxime. Bevorzugt sind Oxime wie 2-Butanonoxim, 3,5-Dimethylpyrazol und 1,2,4-Triazole. Anstelle einer Blockierung von Isocyanatgruppen im gleichen Molekül mit dem Blockierungsmittel, was bevorzugt ist, kann aber auch eine Verbindung, die blockierte Isocyanatgruppen enthält (f2), dem Polyurethan zugemischt werden, die dann beim Härten unter Erhitzen auf mindestens die Deblockierungstemperatur reaktive Isocyanatgruppen freisetzt und für die Härtung bzw. Vernetzungsreaktion zur Verfügung stellt. Es ist auch möglich, Gemische von Isocyanat-Blockierungsmitteln mit unterschiedlichen Deblockierungstemperaturen im vorgenannten Bereich zu verwenden.

### Komponente g)

Schließlich können von den Verbindungen b) bis f) verschiedene Verbindungen g) mit nur einer gegenüber Isocyanaten reaktiven Gruppe mitverwendet werden, z. B. zur Modifizierung der Polyurethaneigenschaften bzw. zur Herabsetzung der Zahl reaktiver freier Isocyanatgruppen.

Zur Modifikation der erfindungsgemäßen Polyurethandispersionen können ihnen in üblicher Art Reaktivverdünner zugesetzt werden, wie sie in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind. Die Reaktivverdünner sollen nach einer ersten Ausführungsform keine Hydroxylgruppen enthalten. Bevorzugte Reaktivverdünner sind Ester der Acrylsäure, die sich von Diolen oder Polyolen ableiten, bevorzugt aliphatischen mehrwertigen Polyalkoholen und Alkoxylierungsprodukten derselben. Beispiele von sehr geeigneten Reaktivverdünnern, die auch zu einer weiteren Erhöhung der Härte der mit den Polyurethandispersionen hergestellten Beschichtungen dienen können, sind z. B. Trimethylolethantri(meth)acrylat, Trimethylolpropantri(meth)acrylat oder Pentaerythrittetra(meth)acrylat. Bevorzugt sind weiterhin Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat. Geeignet sind weiterhin die Ester alicylischer Diole, wie Cyclohexandioldi(meth)acrylat und Bis(hydroxymethylethyl)cyclohexandi(meth)acrylat. Weitere geeignete Reaktivverdünner sind Trimethylolpropanmonoformalacrylat, Glycerinformalacrylat, 4-Tetrahydropyranylacrylat, 2-Tetrahydropyranylmethacrylat und Tetrahydrofurfurylacrylat.

Nach einer weiteren Ausführungsform weisen die Reaktivverdünner wenigstens zwei funktionelle Gruppen auf, die ausgewählt sind unter radikalisch polymerisierbaren Doppelbindungen und gegenüber Isocyanatgruppen reaktiven Gruppen. Dazu zählen zum einen von der Komponente c) verschiedene polymere Polyole. Vorzugsweise liegt das zahlenmittlere Molekulargewicht Mₙ dieser Polymere in einem Bereich von etwa 1000 bis 100000, besonders bevorzugt 2000 bis 10000. Die OH-Zahlen liegen vorzugsweise in einem Bereich von etwa 40 bis 200 mg KOH/g Polymer. Bevorzugte Polymere sind z. B. Copolymerisate, die wenigstens einen der zuvor genannten Monoester zwei- oder mehrwertiger Alkohole mit wenigstens einer α,β-ethylenisch ungesättigten Mono- und/oder Dicarbonsäure und wenigstens ein weiteres Comonomer, vorzugsweise ausgewählt unter Vinylaromaten, wie z. B. Styrol, Estern der zuvor genannten α,β-ungesättigten Mono- und/oder Dicarbonsäuren mit Monoalkoholen, Vinylestern von bis zu 20 Kohlenstoffatomen enthaltenden Carbonsäuren, Vinylhalogeniden, nicht-aromatischen Kohlenwasserstoffen mit 4 bis 8 Kohlenstoffatomen und 1 oder 2 Doppelbindungen, ungesättigten Nitrilen, etc. und Mischungen davon einpolymerisiert enthalten. Dazu zählen weiterhin (teil)hydrolysierte Vinylester-Polymere, bevorzugt Polyvinylacetate. Dazu zählen weiterhin Polyesterole auf Basis von aliphatischen, cycloaliphatischen und/oder aromatischen Di-, Tri- und/oder Polycarbonsäuren mit Di-, Tri- und/oder Polyolen sowie Polyesterole auf Lacton-Basis. Dazu zählen weiterhin Polyetherole, die durch Polymerisation von cyclischen Ethern oder durch Umsetzung von Alkylenoxiden mit einem Startermolekül erhältlich sind, sowie durch Umsetzung von Polyetherolen mit Ammoniak erhältliche α,ω-Diaminopolyether. Dazu zählen weiterhin auch übliche, dem Fachmann bekannte Polycarbonate mit endständigen Hydroxylgruppen, die z. B. durch Umsetzung der zuvor genannten Diole mit Phosgen oder Kohlensäurediestern erhältlich sind.

Geeignete Reaktivverdünner, die wenigstens eine radikalisch polymerisierbare C=C-Doppelbindung und wenigstens eine gegenüber Isocyanatgruppen reaktive Gruppe aufweisen, sind die noch freie Hydroxylgruppen aufweisenden Ester und Polyester der zuvor genannten α,β-ethylenisch ungesättigten Mono- und/oder Dicarbonsäuren mit Diolen oder Polyolen. Dazu zählen z. B. Pentaerythritdiacrylat, Dipentaerythrittetraacrylat, Dipentaerythrittriacrylat, etc. Geeignet sind weiterhin die noch freie Hydroxylgruppen aufweisenden Ester alkoxilierter Polyole mit α,β-ethylenisch ungesättigten Mono- und/oder Dicarbonsäuren, wie z. B. die Acrylate oder Methacrylate von alkoxiliertem Trimethylolpropan, Glycerin oder Pentaerythrit.

Die erfindungsgemäßen Beschichtungsmittel können aus den beschriebenen Einzelkomponenten und vorstehenden Angaben nach dem Fachmann üblichen Verfahren hergestellt werden, wobei bekannte lackübliche Zusatzstoffe, wie Verlaufsmittel, Entschäumer, UV-Absorber, Farbstoffe, Pigmente und/ oder Füllstoffe mitverwendet werden können.

Der Gehalt des Polyurethans in den wässrigen Dispersionen kann insbesondere zwischen 5 und 70 und insbesondere zwischen 20 und 50 Gew.-% liegen, wobei der Feststoffgehalt gravimetrisch bestimmt wird.

Vor der Härtung der Polyurethandispersionen mit UV-Strahlung ist es zweckmäßig, ihnen in einer Menge von 0,01 bis zu 10 und bevorzugt 1 bis 5 Gew.-%, bezogen auf den Trockengehalt der Dispersion, Photoinitiatoren zuzusetzen, wie sie in der Patentanmeldung DE-A-198 60 041 angegeben sind.

Hierzu zählen z. B. Benzophenon und Benzophenonderivate, wie 4-Phenylbenzophenon und 4-Chlorbenzophenon, Michlers Keton, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie Methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate, wie Methylanthrachinon und tert.-Butylanthrachinon, Acylphosphinoxide, wie 2,4,6-Trimethylbenzoyldiphenylphosphinoxid, Ethyl-2,4,6-trimethylbenzoylphenylphosphinat, Methyl-2,4,6-trimethylbenzoylphenylphosphinat und Bisacylphosphinoxide.

Besonders bevorzugt enthalten die erfindungsgemäßen Dispersionen wenigstens einen Photoinitiator, der ausgewählt ist unter Phenylglyoxalsäure und den Estern und Salzen davon. Besonders bevorzugt sind Verbindungen der allgemeinen Formel I 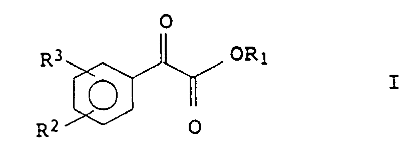
R¹ steht für ein H-Atom oder eine C₁-C₁₈-Alkylgruppe. Bevorzugt steht R¹ für eine C₁-C₈-Alkylgruppe, insbesondere Methyl-, Ethyl-, Propyl-, Butyl-, Hexyl-.
R² und R³ stehen unabhängig voneinander für ein H-Atom, eine C₁-C₁₈-Alkylgruppe oder eine C₁-C₁₈-Alkoxygruppe.
   Bevorzugt stehen R² und R³ unabhängig voneinander für ein H-Atom.
   Der Phenylring ist, soweit zumindest einen der beiden Reste R² und R³ kein H-Atom ist, vorzugsweise in para-Stellung (4-Position) zur Carbonylgruppe substituiert.
   Besonders bevorzugt sind weiterhin Phenylglyoxalsäureester der Formel II 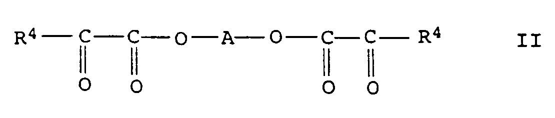 worin die beiden Reste R⁴ unabhängig voneinander für einen Rest der Formel 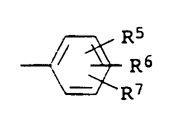 stehen,
R⁵, R⁶ und R⁷ unabhängig voneinander für H, C₁-C₆-Alkyl, das gegebenenfalls durch OH, OC₁-C₆-Alkyl oder OCOC₁-C₆-Alkyl substituiert ist, oder für OH oder OC₁-C₆-Alkyl stehen; A für C₂-C₆-Alkylen oder einen Rest der Formeln 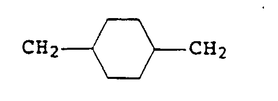 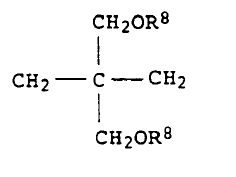 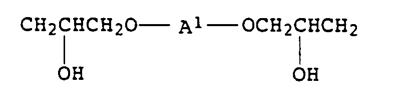 steht,
die Reste R⁸ unabhängig voneinander für H oder COCOR⁴ stehen und A¹ für C₂-C₆-Alkylen oder 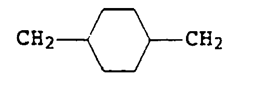
steht.

Derartige Verbindungen sind in der DE-A-198 26 712 und der deutschen Patentanmeldung P-199 13 353.0 beschrieben, worauf hier in vollem Umfang Bezug genommen wird. Vorzugsweise eignen sich die zuvor beschriebenen Photoinitiatoren auf Basis von Phenylglykoxalsäurederivaten für Außenanwendungen, da sie nicht oder wenig vergilben.

Nach einer geeigneten Ausführungsform enthalten die erfindungsgemäßen Dispersionen zusätzlich wenigstens einen thermischen Initiator. Bevorzugte thermische Initiatoren sind solche, die eine Halbwertzeit bei 60°C von mindestens einer Stunde, bevorzugt mindestens 2 Stunden, aufweisen. Die Halbwertszeit eines thermischen Initiators, ist die Zeit, nachdem die Ausgangsmenge des Initiators zur Hälfte in freie Radikale zerfallen ist. Diese Initiatoren ermöglichen im Allgemeinen eine Filmbildung auf einem mit einer erfindungsgemäßen Dispersion beschichteten Substrat nach üblichen Methoden, wie z. B. Ablüften unter Erwärmung, wobei im Wesentlichen noch keine thermische Initiierung und Aushärtung stattfindet.

Bevorzugt wird die thermische Initiatiorkomponente in einer Menge von 0,1 bis 10 Gew.-%, bevorzugt 0,5 bis 5 Gew.-%, bezogen auf die Gesamtmenge der Komponenten a) bis g) eingesetzt.

Geeignete thermische Initiatoren sind im Allgemeinen sämtliche unter den Härtungsbedingungen in Radikale zerfallende Verbindungen, wie z. B. Peroxide, Hydroperoxide, wasserstoffperoxid, Persulfate, Azoverbindungen, hochsubstituierte z. B. hexasubstituierte Ethane, Amin-N-oxide, Redoxkatalysatoren etc. Bevorzugt werden wasserlösliche Initiatoren eingesetzt. Geeignete thermische Initiatoren sind z. B. Triphenylmethylazobenzol, Benzoylperoxid, Di-tert.-Butylperoxid, Cumolhydroperoxid, Dicumylperoxid, tert.-Butylperbenzoat, 2,2,6,6-Tetramethylpiperidin-1-yl-oxi, Benzpinakol und dessen Derivate.

Weiterhin umfasst die thermische Initiatorkomponente bevorzugt wenigstens einen thermischen Initiator mit mindestens einer gegenüber Isocyanatgruppen reaktiven Gruppe, wobei der Initiator auch nach Umsetzung mit einer Isocyanatgruppen-haltigen Verbindung befähigt ist, thermisch Radikale freizusetzen. Dazu zählen z. B. Initiatoren, die wenigstens eine Hydroxylgruppe aufweisen, über die sie in das Polymer eingebaut werden können.

Bevorzugt sind hexasubstituierte Ethane, insbesondere Benzpinakol und die Derivate davon, silylierte Pinakole, die z. B. unter dem Handelsnamen ADDID 600 der Firma Wacker kommerziell erhältlich sind oder Hydroxylgruppen-haltige Amin-N-Oxide, wie 4-Hydroxy-2,2,6,6-Tetramethylpiperidin-1-yloxi (TEMPOL).

Bevorzugt sind Dispersionen, wobei die Isocyanatgruppen der Verbindungen der Komponente a) zu
- 0 bis 70 Mol-%, bevorzugt 20 bis 60 Mol-%, mit gegenüber Isocyanatgruppen reaktiven Gruppen wenigstens einer Verbindung der Komponente c),
- 2 bis 10 Mol-%, bevorzugt 4 bis 8 Mol-%, mit gegenüber Isocyanatgruppen reaktiven Gruppen wenigstens einer Verbindung der Komponente d),
umgesetzt sind. Der Rest der Isocyanatgruppen ad 100 Mol-% besteht im Wesentlichen aus blockierten Isocyanatgruppen. Vorzugsweise beträgt das Verhältnis von blockierten NCO-Äquivalenten zu freien gegenüber NCO reaktiven Gruppen etwa 2:1 bis 1:2, insbe-sondere etwa 1:1.

In der DE-A-198 60 041 ist auch die Durchführung der Beschichtung der Substrate, die Durchführung der UV-Härtung, die vorteilhaft unter Inertgasatmosphäre, sowie die Durchführung der thermischen Härtung beschrieben, bei der sich ein Zusatz von Peroxid als vorteilhaft gezeigt hat. Die in der deutschen Patentanmeldung DE-A-198 60 041 angegebenen Verfahren zur Beschichtung gelten sinngemäß auch für Beschichtungen mit den erfindungsgemäßen Polyurethandispersionen.

Die Beschichtung der Substrate erfolgt dabei in der Regel nach üblichen, dem Fachmann bekannten Verfahren, wobei man wenigstens eine erfindungsgemäße Dispersion auf das zu beschichtende Substrat in der gewünschten Stärke aufbringt und die flüchtigen Bestandteile der Dispersionen entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Die Härtung der auf dem Substrat gebildeten Filme erfolgt im Allgemeinen durch Bestrahlung mit energiereicher Strahlung und thermisch. Dabei ist die Reihenfolge der Härtungsschritte beliebig.

Gegebenenfalls kann, wenn mehrere Schichten des Beschichtungsmittels übereinander aufgetragen werden, nach jedem Beschichtungsvorgang eine Strahlungshärtung erfolgen.

Die Strahlungshärtung erfolgt vorzugsweise durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluss von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Des Weiteren kann die Bestrahlung erfolgen, indem die Beschichtungsmasse mit transparenten Medien abgedeckt wird. Transparente Medien sind z. B. Kunststofffo-lien, Glas oder Flüssigkeiten, z. B. Wasser.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Der Vorteil der erfindungsgemäßen Dispersionen liegt darin, dass man die beschichteten Gegenstände unmittelbar im Anschluss an die Strahlungshärtung weiterverarbeiten kann, weil die Oberfläche nicht mehr klebt. Andererseits ist der vorgehärtete Film noch so flexibel und dehnbar, dass der Gegenstand noch verformt werden kann, ohne dass der Film dabei abplatzt oder reißt.

Selbst wenn keine Verformung des Gegenstandes vorgesehen ist, kann sich das sogenannte Dual-Cure-Verfahren vorteilhaft erweisen, denn die mit dem vorgehärteten Film versehenen Gegenstände können besonders einfach transportiert und gelagert werden, z. B. in Stapeln. Darüber hinaus bietet das Dual-Cure-Verfahren den Vorteil, dass die Beschichtungsmassen in Dunkelbereichen (Bereiche, die für die Strahlung nicht zugänglich sind) chemisch nachhärten können und somit noch ausreichende Materialeigenschaften unabhängig von der Bestrahlung erreicht werden. Des Weiteren härten Spritznebelniederschläge kleb- und emissionsfrei aus.

Ein weiterer Gegenstand der Erfindung ist die Verwendung einer Dispersion, wie zuvor beschrieben, zur Beschichtung von Substraten aus Metall, Holz, Papier, Keramik, Glas, Kunststoff, Textil, Leder, Vlies oder mineralischen Baustoffen.

Besonders bevorzugt eignen sich die erfindungsgemäßen Dispersionen als oder in Außenbeschichtungen, bevorzugt von Gebäuden oder Gebäudeteilen, Straßenmarkierungen, Beschichtungen auf Fahrzeugen und Flugzeugen.

Die erfindungsgemäßen Polyurethandispersionen eignen sich mit besonderem Vorteil zur Beschichtung von Substraten, die sich bei Temperaturen bis 160 °C beschichten lassen, insbesondere von metallischen Substraten wie Eisen oder Aluminium. Besondere Vorteile zeigen die erfindungsgemäßen Beschichtungsmittel bei der Verwendung als Automobilklarlacke.

Die erfindungsgemäß hergestellten wässrigen Polyurethandispersionen zeigen gegenüber bekannten ähnlichen Produkten eine hohe Kratzfestigkeit bei gleichzeitig guter Chemikalienfestigkeit, eine gute Witterungsstabilität und gute mechanische Eigenschaften sowie gute Lackeigenschaften in den nicht belichteten Bereichen.

Die nachstehenden Beispiele sollen die Erfindung weiter erläutern, aber nicht beschränken.

### Beispiele

Soweit nicht anders angegeben, beziehen sich angegebene Teile und Prozente auf das Gewicht.

Die angegebenen Kontaktwinkel wurden über den Kontaktwinkel eines Wassertropfens bestimmt, wie in Adamson, Physical Chemistry of Surfaces, Chapter X, 5. Auflage, Wiley Verlag, New York, beschrieben.

Die Härte der Beschichtung wurde als Bleistifthärte ermittelt, wie es in Organic Coatings, Science and Technology, Vol. 2, S. 128, Wiley Verlag, New York 1994, beschrieben ist. Der Glanzverlust wurde wie in Beispiel 2d) angegeben bestimmt.

Die angegebenen Molekulargewichte wurden durch Gelpermeationschromatographie (Polystyrolstandard, Elutionsmittel: Tetrahydrofuran, UV-Detektion) bestimmt.

### Beispiel 1

Herstellen einer Dual-Cure-Polyurethanacrylatdispersion mit verkappten Isocyanatgruppen

### 1a) Herstellen des Präpolymeren:

In einem Rührkessel wurden 455 Teile 2-Hydroxyethylacrylat, 377 Teile 2,2-Bis(4-hydroxycyclohexyl)propan, 2,3 Teile 2,6-Di-tert.-Butyl-p-kresol, 1,2 Teile Hydrochinonmonomethylether vorgelegt, 0,5 Teile Dibutylzinndilaurat und 1500 Teile des Isocyanurats von Hexamethylen-1,6-diisocyanat zugegeben und 5 Stunden bei 60 °C gerührt. Danach wurde mit 500 Teilen Aceton verdünnt.

### 1b) Herstellen der wässrigen Polyurethandispersion:

150 Teilen der hergestellten Lösung wurden 1,4 Teile Thioglykolsäure, 1,6 Teile Butanon-2-oxim und 1,8 Teile Triethylamin zugemischt. Der Ansatz wurde 8 Stunden bei 40 °C gehalten. Danach wurde er in Wasser dispergiert und das Aceton abdestilliert.

### 1c) Herstellen und Testen von Lackfilmen:

Die hergestellte wässrige Dispersion wurde mit 4 % eines Gemischs von gleichen Teilen an Benzophenon und 1-Hydroxycyclohexylphenylketon als Photoinitiator versetzt und in Schichtdicken von ca. 40 µm auf verschiedene Substrate aufgetragen. Die Filme wurden über Nacht bei Raumtemperatur abgelüftet, danach 15 Minuten bei 60 °C getempert und auf einem Transportband bei 10 m/Minute mit zwei UV-Lampen (80 w/cm) bestrahlt. Der Kontaktwinkel war 62°. Danach wurde eine Lackschicht noch 15 Minuten bei 150 °C getempert. Ergebnis: Kontaktwinkel 74°; Bleistifthärte: 2 H. Dies zeigt, dass Hydrophilie und Härte durch die zusätzliche thermische Behandlung verbessert werden können. Die belichteten und getemperten Lackschichten zeigten im Xenon-Test nach DIN 53387 (Gerät: Xenotest 1200 der Fa. Heraeus, Hanau) nach 1000 Stunden keinen Glanzabfall und keine Vergilbung.

### Vergleichsversuch 1

Es wurde wie in Beispiel 1 verfahren, jedoch wurden beim Herstellen der Polyurethandispersion statt 1,6 Teile Butanon-2-oxim 1,2 Teile Methanol zugesetzt. Nach dem Bestrahlen mit UV-Lampen betrug der Kontaktwinkel 62°, nach dem nachfolgenden 15 Minuten Tempern bei 150 °C 71° und die Bleistifthärte 1H.

### Beispiel 2

Herstellen einer Dual-Cure-Polyurethanacrylatdispersion mit überschüssigen OH-Gruppen und separater Zumischung von verkappten Isocyanaten

### 2a) Herstellen eines Allophanats aus Hexamethylendiisocyanat und 2-Hydroxyethylacrylat:

Die Herstellung erfolgte gemäß DE-A-198 60 041, Experim. Teil 1.1, Produkt Nr. 6. Hexamethylendiisocyanat wurde unter Stickstoffbedeckung mit 40 mol% (bezogen auf das Isocyanat) 2-Hydro-xyethylacrylat vermischt und auf auf 80 °C erwärmt. Nach Zugabe von 200 Gew.-ppm (bezogen auf Diisocyanat) N,N,N-Trimethyl-N-(2-hydroxypropyl)ammonium-2-ethylhexanoat wurde die Temperatur langsam auf 120 °C erhöht und bei dieser Reaktionstemperatur gehalten. Bei einem Isocyanatgehalt der Mischung von 13,5 Gew.-% wurde die Reaktion durch Zugabe von 250 Gew.-ppm Di(2-Ethylhexyl)phosphat (bezogen auf Diisocyanat) gestoppt. Das Reaktionsgemisch wurde dann im Dünnschichtverdampfer bei 135 °C und 2,5 mbar von nicht-umgesetztem Hexamethylendiisocyanat befreit. Das Produkt hatte nach der Destillation einen NCO-Gehalt von 13,5 Gew.-% und eine Viskosität von 810 mPas bei 23 °C.

### 2b) Herstellen des Präpolymeren:

In einem Rührkessel wurden 26 Teile 2-Hydroxyethylacrylat, 0,2 Teile 2,6-Di-tert.-Butyl-p-kresol, 0,1 Teile Hydrochinonmonomethylether vorgelegt. Dann wurden 0,02 Teile Dibutylzinndilaurat und 152 Teile des wie vorstehend angegeben hergestellten Allophanats aus Hexamethylendiisocyanat und 2-Hydroxyethylacrylats zugegeben und die resultierende Mischung 3 Stunden bei 70 °C gerührt.

### 2c) Herstellen der wässrigen Polyurethandispersion:

Nach Zugabe von 2,6 Teilen Thioglykolsäure wurde weitere 3 Stunden bei 70 °C gerührt und abgekühlt. Die Mischung wurde mit 100 Teilen Aceton verdünnt und mit 3,5 Teilen Triethylamin und 23 Teilen Diethanolamin versetzt. Danach wurden 50 Teile einer 70 %igen Lösung des Umsetzungsproduktes von Dimethylpyrazol mit dem Isocyanurat von Isophorondiisocyanat in Methylethylketon eingerührt und 200 Teile Wasser innerhalb von 15 Minuten zugetropft. Es resultierte eine stabile Dispersion mit einer Teilchengröße von 320 nm.

### 2d) Herstellen und Testen von Lackfilmen:

Die gemäß 2c) hergestellte Dispersion wurde mit 3 Gew.-% des in 1c) angegebenen Photoinitiatorgemischs vermischt und damit wurden auf verschiedenen Substraten Lackfilme in einer Dicke von ca. 40 µm hergestellt. Die Filme wurden über Nacht bei Raumtemperatur gelüftet und anschließend 15 Minuten bei 60 °C getempert. Danach wurden Proben der Filme in den Versuchen A1, A2 und A3 unterschiedlich gehärtet und zwar
Versuch A1: Strahlenhärtung auf einem Transportband 10 m/Min. mit 2 UV-Lampen (80 W/cm);
Versuch A2: Im Trockenofen 30 Min. bei 150 °C gehärtet;
Versuch A3: Strahlenhärtung wie A1, danach Härtung wie A2.

Nach den Härtungen A1 bis A3 waren alle Filme physikalisch trocken und durchgehärtet (Fingernageltest).

Die Beurteilung der Kratzfestigkeit erfolgte in einem Scheuertest, bei dem mit einem Scotch Brite Gewebe unter einem Gewicht von 750 g 50 Doppelhübe ausgeführt wurden. Der Verkratzungsgrad wurde über die Bestimmung des Glanzabfalls (vor und nach entsprechender Beanspruchung) bestimmt.

Im Scotch Brite-Test (50 Doppelhübe) ergab sich bei den Versuchen A1 bis A3 ein Glanzverlust von: A1:16; A2:35; A3:12.

### Beispiel 3

Herstellen einer Dual-Cure-Polyurethanacrylatdispersion mit verkappten Isocyanaten und OH-Gruppen in verschiedenen Molekülen

### 3a) Herstellung des Präpolymeren:

In einem Rührkessel wurden 26 Teile 2-Hydroxyethylacrylat, 0,2 Teile 2,6-Di-tert.-Butyl-p-kresol, 0,1 Teile Hydrochinonmonomethylether vorgelegt. 0,02 Teile Dibutylzinndilaurat und 152 Teile eines Allophanats aus Hexamethylendiisocyanat und 2-Hydroxyethylacrylat (hergestellt gemäß Beispiel 2a) wurden zugemischt und das Gemisch 3 Stunden bei 70°C gerührt.

### 3b) Herstellen der Polyurethandispersion:

Es wurden 2,6 Teile Thioglykolsäure zugemischt, das Reaktionsgemisch weitere 3 Stunden bei 70°C gerührt und abgekühlt. Danach wurde der Ansatz mit 100 Teilen Aceton verdünnt, 3,5 Teile Triethylamin und 23 Teile Diethanolamin zugegeben und 50 Teile einer 70 %igen Lösung des Umsetzungsproduktes von Dimethylpyrazol mit dem Isocyanurat des Isophorondiisocyanats in Methylethylketon eingerührt und 200 Teile Wasser innerhalb von 15 Minuten zugetropft. Es entstand eine stabile Dispersion mit einer Teilchengröße von 320 nm.

### 3c) Herstellen und Testen von Lackfilmen:

In die Polyurethandispersion wurden 3 Gew.-% des in Beispiel 1c) genannten Photoinitiatorgemischs eingemischt und mit der Mischung wurden Lackfilme einer Schichtdicke von ca. 40 µm auf verschiedene Substrate aufgebracht. Die Filme wurden über Nacht bei Raumtempe-ratur gelüftet und danach 15 Minuten lang bei 60 °C getempert. Danach wurden Proben der getemperten Filme wie folgt gehärtet:
Versuch A4: Strahlenhärtung auf einem Transportband 10 m/Min. mit 2 UV-Lampen (80 W/cm);
Versuch A5: Im Trockenofen 30 Min. bei 150 °C gehärtet.

Nach den Härtungen A4 und A5 waren die Filme physikalisch trocken und durchgehärtet (Fingernageltest). Im wie in Beispiel 2d) ausgeführten Scotch Brite-Test (50 Doppelhübe) ergab sich beim Versuch A4 ein Glanzverlust von 16 und beim Versuch A5 ein Glanzverlust von 35.

### Beispiel 4

Herstellen einer Dual-Cure-Polyurethanacrylatdispersion mit verkappten Isocyanaten und OH-Gruppen in einem Molekül

### 4a) Herstellen des Präpolymeren:

In einem Rührkessel wurden 100 Teile eines gemäß Beispiel 2a) hergestellten Allophanats aus Hexamethylendiisocyanat und 2-Hydroxyethylacrylat, 0,13 Teile 2,6-Di-tert.-Butyl-p-kresol, 0,1 Teile Hydrochinonmonomethylether vorgelegt. Nach Zumischen von 0,02 Teilen Dibutylzinndilaurat und 17,5 Teilen 3,5-Dimethylpyrazol wurde das Reaktionsgemisch 3 Stunden bei 70 °C gerührt.

### 4b) Herstellen der Polyurethandispersion:

Dem erhaltenen Reaktionsgemisch wurden 3,3 Teile Thioglykolsäure zugemischt, dieses dann weitere 3 Stunden bei 70 °C gerührt und abgekühlt. Der NCO-Gehalt betrug 3%. Nach Zumischen von 9,6 Teilen Diethanolamin und 4,4 Teilen Triethylamin wurde in Wasser dispergiert.

### 4c) Herstellen und Testen von Lackfilmen:

Die gemäß 4b) hergestellte Dispersion wurde mit 3 Gew.-% des in 1c) angegebenen Photoinitiatorgemischs vermischt und damit wurden auf schwarz eingefärbten Glasplatten Filme mit einer Schichtdicke von ca. 40 µm hergestellt, die alle über Nacht bei Raumtemperatur gelüftet und danach 15 Minuten lang bei 60 °C getempert wurden. Die Filmproben wurden dann in den Versuchen A6 bis A9 wie folgt gehärtet:
Versuch A6: Strahlenhärtung auf einem Transportband 10 m/Min.;
Versuch A7: Im Trockenofen 30 Min. bei 150 °C gehärtet;
Versuch A8: Nach Härtung wie in A7 Strahlenhärtung wie A6;
Versuch A9: Nach Zumischung von 3 Gew.-% von tert.-Butylbenzoat Härtung wie in A7.

An den nach der Härtung erhaltenen physikalisch trockenen Filmen hatten diese die folgenden Bleistifthärten: A6: <6B; A7: <6B; A8: 3B; A9: 4B. Es zeigte sich, dass durch Zumischen von Peroxiden zur Dispersion vor deren Härtung die Härte der resultierenden gehärteten Filme noch erhöht werden kann. Zur Beurteilung der Kratzfestigkeit wurde wie in Beispiel 2d) angegeben im Scotch Brite-Test (50 Doppelhübe) der Glanzverlust bei den bei den Versuchen A6 bis A9 resultierenden Filmen mit folgenden Ergebnissen ermittelt: A6: 47; A7: 16; A8: 29; A9: 27.

### Beispiel 5

Herstellen einer Dual-Cure-Polyurethanacrylatdispersionen mit verkappten Isocyanaten und OH-Gruppen in einem Molekül unter Zusatz von Reaktivverdünner

Es wurde wie in Beispiel 4 verfahren, jedoch wurden der Dispersion vor ihrer Verarbeitung zu Filmen auf schwarz eingefärbten Glasplatten neben 3 Gew.-% der in Beispiel 1c) angegebenen Initiatormischung noch 43 Gew.-% Trimethylolpropantriacrylat als Reaktivverdünner zugemischt. Die resultierenden ca. 40 µm dicken Filme wurden nach dem Ablüften über Nacht und dem anschließenden 15-minütigem Tempern bei 60 °C wie folgt gehärtet:
Versuch A10: im Trockenofen 30 Min. 140 °C, danach Strahlenhärtung auf Transportband 10 m/Min. mit 2 UV-Lampen (80 W/cm) an Luft;
Versuch A11: im Trockenofen 30 Min. 140 °C, danach Strahlenhärtung auf Transportband 10 m/Min. mit 2 UV-Lampen (80 W/cm) unter Stickstoff;
Versuch A12: Strahlenhärtung auf Transportband 10 m/Min. mit 2 UV-Lampen (80 W/cm) an Luft, danach im Trockenofen 30 Min. 140 °C;
Versuch A13: Strahlenhärtung auf Transportband 10 m/Min. mit 2 UV-Lampen (80W/cm) unter Stickstoff, danach im Trockenofen 30 Min. 140°C.

Zur Beurteilung der Kratzfestigkeit wurde wie in Beispiel 2d) angegeben im Scotch Brite-Test (50 Doppelhübe) der Glanzverlust bei den bei den Versuchen A10 bis A13 resultierenden Filmen mit folgenden Ergebnissen ermittelt:
A10: 94; A11: 8; A12: 34; A13: 13. Ein Zusatz von Reaktivverdünner und eine Härtung unter Stickstoff tragen danach zu einer Erhöhung der Kratzfestigkeit bei. Die Chemikalienstabilität des Versuchs A13 wurde über die Temperatur bestimmt, ab der eine Schädigung der Oberfläche eintrat:

Die Werte Wasser >75 °C, Schwefelsäure 49 °C, Baumharz >75 °C und Keratin 60 °C belegen gute Beständigkeiten. Die Flexibilität gemäß Erichsen (DIN 53156) beträgt 4,5 mm.

### Beispiel 6

Dual-Cure-Polyurethandispersionen mit einer Mischung von Isocyanaten

### 6a) Herstellen eines Allophanats aus Hexamethylendiisocyanat und 2-Hydroxyethylacrylat:

Hexamethylendiisocyanat wurde unter Stickstoffbedeckung mit 40 mol% (bezogen auf das Isocyanat) 2-Hydroxyethylacrylat vermischt und auf auf 80 °C erwärmt. Nach Zugabe von 200 Gew.-ppm (bezogen auf Diisocyanat) N,N,N-Trimethyl-N-(2-hydroxypropyl)ammonium-2-ethylhexanoat wurde die Temperatur langsam auf 120 °C erhöht und bei dieser Reaktionstemperatur gehalten. Bei einem Isocyanatgehalt der Mischung von 13,5 Gew.-% wurde die Reaktion durch Zugabe von 250 Gew.-ppm Di(2-ethylhexyl)phosphat (bezogen auf Diisocyanat) gestoppt. Das Reaktionsgemisch wurde dann im Dünnschichtverdampfer bei 135 °C und 2,5 mbar von nicht-umgesetztem Hexamethylendiisocyanat befreit. Das Produkt hatte nach der Destillation einen NCO-Gehalt von 13,5 Gew.-% und eine Viskosität von 810 mPas bei 23°C.

### 6b) Herstellen der wässrigen Polyurethandispersion:

In einem Rührkessel wurden 80 Teile des Allophanats aus Beispiel 6a), 20 Teile des Isocyanurats von Isophorondiisocyanat (Vestanat^{®} T1890, Fa. Hüls), 12,4 Teile Decandiol, 0,13 Teile 2,6-Di-tert.-Butyl-p-kresol, 0,1 Teile Hydrochinonmonomethylether und 0,03 Teile Dibutylzinndilaurat vorgelegt. Dann wurden 9,9 Teile Hydroxyethylacrylat zugegeben und die resultierende Mischung 3 Stunden bei 70 °C gerührt. Nach Zugabe von 2 Teilen Thioglykolsäure und 1,1 Teilen Methanol wurde weitere 4 Stunden bei 70 °C gerührt und der Reaktionsansatz dann abgekühlt. Nach Zugabe von 2,3 Teilen Triethylamin wurde das resultierende Produkt in Wasser dispergiert.

### Beispiel 7

### Polyurethandispersion mit zugesetztem Reaktivverdünner

Es wurde wie in Beispiel 6 verfahren, wobei vor der Dispergierung 30 Teile Decandioldiacrylat zugesetzt wurden.

### Beispiel 8

### Dual-Cure-Polyurethandispersion mit verkappten Isocyanatgruppen und Hydroxylgruppen in verschiedenen Molekülen

In einem Rührkessel wurden 140 Teile des Allophanats aus Beispiel 6a), 20 Teile des Isocyanurats von Isophorondiisocyanat (Vestanat^{®} T1890, Fa. Hüls), 17 Teile Cyclohexan-1,4-dimethanol, 0,2 Teile 2,6-Di-tert.-Butyl-p-kresol, 0,1 Teile Hydrochinonmonomethylether und 0,04 Teile Dibutylzinndilaurat vorgelegt. Dann wurden 9,9 Teile Triazol zugegeben und 3 Stunden bei 70 °C gerührt. Nach Zugabe von 3 Teilen Thioglykolsäure und 4 Teilen Methanol wurde weitere 4 Stunden bei 70°C gerührt und der Reaktionsansatz dann abgekühlt. Dann wurden 3,8 Teile Triethylamin zugegeben, 0,5 Stunden bei 70 °C gerührt, 41,6 Teile Pentaerythrittriacrylat zugegeben und das resultierende Produkt in Wasser dispergiert.

Die Dispersionen der Beispiel 6 - 8 wurden mit 4 Gew.-% einer Photoinitiatormischung aus 1-Hydroxycyclohexylphenylketon und Benzophenon (Irgacure^{®} 500 der Fa. Ciba) versetzt und in Schichtdicken von ca. 40 µm auf Bleche aufgetragen. Die Filme wurden über Nacht bei Raumtemperatur abgelüftet und anschließend 15 Minuten bei 60 °C getempert. Danach wurden die Filme einer Strahlenhärtung auf einem Transportband mit einer Geschwindigkeit von 10 m/min mit zwei UV-Lampen (80 W/cm) und einer anschließenden thermischen Härtung von 30 Minuten im Trockenofen bei 150°C unterzogen. Der Verkratzungsgrad wurde über die Bestimmung des Glanzabfalls (vor und nach entsprechender Beanspruchung) bestimmt. Die Ergebnisse der Kratzbeständigkeitsprüfung sind in Tabelle 1 wiedergegeben. Die Chemikalienbeständigkeit wurde durch Aufbringen von einer Tropfenreihe der entsprechenden Chemikalien auf dem jeweiligen lackierten Blech und Ausheizen des Blechs auf einem Temperaturgradientenofen bestimmt. In Tabelle 1 sind die Temperaturen angegeben, ab denen eine Lackschädigung auftrat.

**Tabelle 1:**

| Dispersion aus Bsp.-Nr. | Kratzbeständigkeit (Glanzabfall/%) | Chemikalienbeständigkeit | |
|---|---|---|---|
| 6 | 5,2 | H₂SO₄: | 42 °C |
| | | Baumharz: | 61 °C |
| | | Wasser: | 65 °C |
| 7 | 3,0 | H₂SO₄: | 47 °C |
| | | Baumharz: | 55 °C |
| | | Wasser: | 66 °C |
| 8 | 9,0 | H₂SO₄: | 46 °C |
| | | Baumharz: | 50 °C |
| | | Wasser: | 49 °C |

### Beispiel 9

### Dual-Cure-Polyurethandispersion mit einer Mischung von Isocyanaten

In einem Rührkessel wurden 90 Teile des Allophanats aus Beispiel 6a), 10 Teile des Isocyanurats von Isophorondiisocyanat (Vestanat^{®} T1890, Fa. Hüls), 12,42 Teile Decandiol, 0,13 Teile 2,6-Di-tert.-Butyl-p-kresol, 0,1 Teile Hydrochinonmonomethylether und 0,03 Teile Dibutylzinndilaurat vorgelegt. Dann wurden 5,5 Teile 1,2,4-Triazol zugegeben und weitere 3 Stunden bei 70 °C gerührt. Nach Zugabe von 2 Teilen Thioglykolsäure und 5,3 Teilen Trimethylolpropan wurde weitere 4 Stunden bei 70 °C gerührt und der Reaktionsansatz dann abgekühlt. Nach Zugabe von 2,3 Teilen Triethylamin wurde das resultierende Produkt in Wasser dispergiert. Die anwendungstechnische Beurteilung erfolgte durch Bestimmung der Kratzbeständigkeit und der Chemikalienbeständigkeit, wie zuvor bei den Beispielen 6 - 8 beschrieben. Zusätzlich wurde die Härte der Filme nach DIN 50359 sowie deren Vergilbung (farbmetrisch gemäß DIN 6174, 0°-Wert) bestimmt. Die Ergebnisse sind ebenfalls in Tabelle 2 wiedergeben. Zum Vergleich dient die erfindungsgemäße Dispersion aus Beispiel 4.

**Tabelle 2:**

| Dispersion aus Bsp.-Nr. | Kratzbeständigkeit (Glanzabfall/%) | Chemikalienbeständigkeit | | Härte (N/mm²) | Vergilbung |
|---|---|---|---|---|---|
| 9 | 2,9 | H₂SO₄: | 44 °C | 146 | 3,5 |
| | | Baumharz: | 57°C | | |
| | | Wasser: | 59 °C | | |
| 4 | 8,5 | H₂SO₄: | <37°C | 139 | 6,8 |
| | | Baumharz: | <37°C | | |
| | | Wasser: | <37 °C | | |

Wie die Ergebnisse der anwendungstechnischen Prüfung zeigen, lassen sich die bereits guten Eigenschaften der erfindungsgemäßen Dispersion 4 bei Einsatz eines Gemischs von Isocyanaten nochmals verbessern.

### Beispiel 10 - 12

Es wurde wie in Beispiel 9 verfahren, wobei das Decandiol durch ein anderes kurzkettiges Diol ausgetauscht wurde. Die Ergebnisse der anwendungstechnischen Prüfung sind in Tabelle 3 wiedergegeben.

**Tabelle 3:**

| Dispersion aus Bsp.-Nr. | Diol | Kratzbeständigkeit (Glanzabfall/%) | Chemikalienbeständigkeit | |
|---|---|---|---|---|
| 10 | Hexandiol | 4,4 | H₂SO₄: | 48 °C |
| | | | Baumharz: | 75 °C |
| | | | Wasser: | 75 °C |
| 11 | HCP ¹⁾ | 7,4 | H₂SO₄: | 43°C |
| | | | Baumharz: | 38 °C |
| | | | Wasser: | 43 °C |
| 12 | CHDM ²⁾ | 4,3 | H₂SO₄: | 42 °C |
| | | | Baumharz: | 71 °C |
| | | | Wasser: | 61 °C |

| | | | | |
|---|---|---|---|---|
| ¹⁾ Bis(hydroxycyclohexyl)-propan ²⁾ Cyclohexandimethylol | | | | |

## Patentansprüche

1. Mit UV-Strahlung sowie thermisch härtbare wässrige Polyurethandispersionen, im Wesentlichen aufgebaut aus
a) aliphatischen Polyisocyanaten mit einer NCO-Funktionalität von 2 bis 4,5,
b) Verbindungen mit mindestens einer gegenüber Isocyanat reaktiven Gruppe sowie mindestens einer in Gegenwart eines Photoinitiators mit UV-Strahlung polymerisierbaren C=C-Doppelbindung,
c) aliphatischen Verbindungen mit mindestens zwei gegenüber Isocyanat reagierenden Hydroxylgruppen mit einem Molekulargewicht unter 500 g/mol,
d) Verbindungen mit mindestens einer gegenüber Isocyanatgruppen reaktiven Gruppe sowie mindestens einer Carbonsäure- oder Sulfonsäuregruppe,
e) mindestens einer basischen Verbindung für eine Neutralisation oder Teilneutralisation der Säuregruppen der Verbindungen d),
f) einem Isocyanat-Blockierungsmittel (f1), das Isocyanatgruppen in blockierte Isocyanatgruppen mit einer Deblockierungstemperatur im Bereich von 70 bis 160 °C umwandelt, oder Zusatz einer Verbindung (f2), die blockierte Isocyanatgruppen enthält, sowie
g) gegebenenfalls weiteren von den Verbindungen b) bis f) verschiedenen Verbindungen, die nur eine gegenüber Isocyanat reaktive Gruppe aufweisen,
wobei die mit einem stöchiometrischen überschuss an NCO Gruppen im Verhältnis zu Hydroxylgruppen hergestellten Reaktionsprodukte von a) mit b) und gegebenenfalls c) mit zur Dispergierbarkeit in wässrigem Medium hinreichenden Mengen an Verbindungen d) und e) umgesetzt und durch Reaktion mit Isocyanat-Blockierungsmitteln (f1) blockierte Isocyanatgruppen in das Molekül eingeführt oder Verbindungen (f2), die blockierte Isocyanatgruppen enthalten, zugegeben wurden.

2. Polyurethandispersionen nach Anspruch 1, **dadurch gekennzeichnet, dass** sie Verbindungen b) als Zusatz enthalten.

3. Polyurethandispersionen nach Anspruch 1, **dadurch gekennzeichnet, dass** sie im Polyurethan mit UV-Strahlung polymerisierbare C=C-Doppelbindungen, Hydroxylgruppen und blockierte Isocyanatgruppen enthalten.

4. Polyurethandispersionen nach Anspruch 1, **dadurch gekennzeichnet, dass** sie Verbindungen mit durch UV-Strahlung polymerisierbaren C=C-Doppelbindungen und Hydroxylgruppen sowie Verbindungen mit blockierten Isocyanatgruppen enthalten.

5. Polyurethandispersionen nach Anspruch 1, **dadurch gekennzeichnet, dass** sie Verbindungen mit durch UV-Strahlung polymerisierbaren C=C-Doppelbindungen, über Isocyanat eingebaute aliphatische Kohlenwasserstoffdiole mit einem Molekulargewicht von unter 500 g/mol, freie Hydroxylgruppen sowie Verbindungen mit blockierten Isocyanatgruppen enthalten.

6. Polyurethandispersionen nach Anspruch 1, enthaltend durch UV-Strahlung polymerisierbare C=C-Doppelbindungen und Hydroxylgruppen, **dadurch gekennzeichnet, dass** sie aus Isocyanurat-Biuret- oder Allophanat-Gruppen enthaltenden aliphatischen Polyisocyanaten aufgebaut sind.

7. Polyurethandispersionen nach einem der vorhergehenden Ansprüche, wobei die Komponente a) wenigstens eine Verbindung Va) mit zwei freien Isocyanatgruppen, mindestens einer Allophanatgruppe und mindestens einer radikalisch polymerisierbaren C=C-Doppelbindung, wobei direkt an die Doppelbindung eine Carbonylgruppe oder ein Sauerstoffatom in Etherfunktion gebunden ist, umfasst.

8. Polyurethandispersionen nach Anspruch 7, wobei die Verbindung Va) ausgewählt ist unter Verbindungen der allgemeinen Formel I 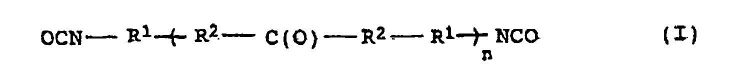 worin
n für eine ganze Zahl von 1 bis 10 steht,
R¹ für eine zweiwertige aliphatische oder alicyclische C₂- bis C₂₀-Kohlenwasserstoffeinheit oder eine aromatische C₆- bis C₂₀-Kohlenwasserstoffeinheit steht,
R² in jeder Wiederholungseinheit einmal für -NH- und einmal für 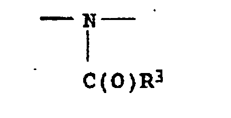 steht, wobei R³ für einen von einem Alkohol A durch Abstraktion des B-Atoms von der alkoholischen Hydroxylgruppe abgeleiteten Rest steht, wobei der Alkohol A zusätzlich wenigstens eine radikalisch polymerisierbare C=C-Doppelbindung aufweist und wobei direkt an die Doppelbindung eine Carbonylgruppe oder ein Sauerstoffatom in Etherbindung gebunden ist.

9. Polyurethandispersionen nach einem der Ansprüche 7 oder 8, wobei die Komponente a) wenigstens eine Verbindung Va) und wenigstens ein weiteres, davon verschiedenes Polyisocyanat umfasst.

10. Polyurethandispersionen nach Anspruch 1, enthaltend durch UV-Strahlung polymerisierbare C=C-Doppelbindungen und Hydroxylgruppen, **dadurch gekennzeichnet, dass** sie aus den Allophanaten von Hexamethylendiisocyanat und Hydroxyethylacrylat und/oder Mischungen davon aufgebaut sind.

11. Polyurethandispersionen nach Anspruch 1, enthaltend durch UV-Strahlung polymerisierbare C=C-Doppelbindungen und Hydroxylgruppen, **dadurch gekennzeichnet, dass** sie aus Isocyanurat-, Biuret- oder Allophanatgruppen enthaltenden aliphatischen Polyisocyanaten als Baustein a), Hydroxyalkyl(meth)acrylaten als Baustein b), aliphatischen Diolen eines Molekulargewichts von unter 500 g/mol als Baustein c) und Monothio- oder Monohydroxycarbonsäuren als Baustein d) aufgebaut sind.

12. Polyurethandispersionen nach Anspruch 1, **dadurch gekennzeichnet, dass** sie zugesetzte Reaktivverdünner enthalten.

13. Polyurethandispersionen nach Anspruch 1, dass sie zugesetzte übliche Lackzusatzstoffe enthalten.

14. Polyurethandispersionen nach Anspruch 1 mit durch UV-Strahlung polymerisierbaren C=C-Doppelbindungen und Hydroxylgruppen, **dadurch gekennzeichnet, dass** sie in einer Menge von 0,1 bis 5 Gew.-% ihres Feststoffgehalts einen Photoinitiator enthalten.

15. Polyurethandispersionen nach einem der vorhergehenden Ansprüche, **dadurch gekennzeichnet, dass** sie wenigstens einen thermischen Initiator enthalten.

16. Polyurethandispersionen nach Anspruch 15, wobei der thermische Initiator eine Halbwertszeit bei 60 °C von mindestens einer Stunde aufweist.

17. Polyurethandispersionen nach einem der Ansprüche 15 oder 16, wobei es sich bei dem thermischen Initiator um wenigstens eine Verbindung mit mindestens einer gegenüber Isocyanatgruppen reaktiven Gruppe handelt, die auch nach Umsetzung mit einer Isocyanatgruppen-haltigen Verbindung befähigt ist, thermisch Radikale freizusetzen.

18. polyurethandispersionen nach einem der Ansprüche 15 bis 17, wobei der thermische Initiator Benzpinakol oder ein Derivat davon umfasst.

19. Verwendung der Polyurethandispersionen gemäß einem der Ansprüche 1 bis 18 zur Beschichtung von Substraten, die sich bei Temperaturen bis zu 160 °C beschichten lassen.

20. Verwendung einer Polyurethandispersion nach einem der Ansprüche 1' bis 18 zur Beschichtung von Substraten aus Metall, Holz, Papier, Keramik, Glas, Kunststoff, Textil, Leder, Vlies oder mineralischen Baustoffen.

21. Verwendung einer Polyurethandispersion nach einem der Ansprüche 1 bis 18 als oder in Außenbeschichtungen, bevorzugt von Gebäuden oder Gebäudeteilen, Straßenmarkierungen, Beschichtungen auf Fahrzeugen und Flugzeugen.

22. Verwendung der Polyurethandispersionen gemäß einem der Ansprüche 1 bis 18 als Automobilklarlacke.

## Claims

1. A UV- and heat-curable aqueous polyurethane dispersion synthesized essentially from
a) aliphatic polyisocyanates having an NCO functionality of from 2 to 4.5,
b) compounds containing at least one isocyanate-reactive group and at least one C=C double bond UV-polymerizable, in the presence of a photoinitiator,
c) aliphatic compounds containing at least two isocyanate-reactive hydroxyl groups, having a molecular weight of less than 500 g/mol,
d) compounds containing at least one isocyanate-reactive group and also at least one carboxyl group or sulfonic acid group,
e) at least one basic compound for full or partial neutralization of the acid groups of the compounds d),
f) an isocyanate blocking agent (f1) which converts isocyanate groups into blocked isocyanate groups with an unblocking temperature in the range from 70 to 160°C, or addition of a compound (f2) comprising blocked isocyanate groups, and
g) if appropriate, further compounds other than compounds b) to f) which contain only one isocyanate-reactive group, the reaction products of a) with b) and, if appropriate, c), prepared with a stoichiometric excess of NCO groups in relation to hydroxyl groups, having been reacted with compounds d) and e) in amounts sufficient for dispersibility in aqueous medium, blocked isocyanate groups having been introduced into the molecule by reaction with isocyanate blocking agents (f1), or compounds (f2) comprising blocked isocyanate groups having been added.

2. The polyurethane dispersion according to claim 1, comprising compounds b) as additive.

3. The polyurethane dispersion according to claim 1, comprising in the polyurethane UV-polymerizable C=C double bonds, hydroxyl groups, and blocked isocyanate groups.

4. The polyurethane dispersion according to claim 1, comprising compounds containing UV-polymerizable C=C double bonds and hydroxyl groups and compounds containing blocked isocyanate groups.

5. The polyurethane dispersion according to claim 1, comprising compounds containing UV-polymerizable C=C double bonds, aliphatic hydrocarbon diols incorporated via isocyanate and having a molecular weight of less than 500 g/mol, free hydroxyl groups, and compounds containing blocked isocyanate groups.

6. The polyurethane dispersion according to claim 1 comprising UV-polymerizable C=C double bonds and hydroxyl groups, synthesized from aliphatic polyisocyanates comprising isocyanurate, biuret or allophanate groups.

7. The polyurethane dispersion according to any of the preceding claims, wherein component a) comprises at least one compound Va) containing two free isocyanate groups, at least one allophanate group and at least one free-radically polymerizable C=C double bond, a carbonyl group or an oxygen atom in ether function being attached directly to the double bond.

8. The polyurethane dispersion according to claim 7, wherein said compound Va) is selected from compounds of the formula I 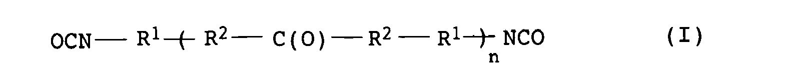 where
n is an integer from 1 to 10,
R¹ is a divalent aliphatic or alicyclic C₂ to C₂₀ hydrocarbon unit or an aromatic C₆ to C₂₀ hydrocarbon unit,
R² in each repeating unit is once -NH- and once 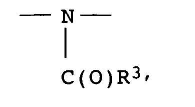 R³ being a radical derived from an alcohol A by abstracting the hydrogen atom from the alcoholic hydroxyl group, said alcohol A further comprising at least one free-radically polymerizable C=C double bond, and a carbonyl group or an oxygen atom in ether attachment being attached directly to the double bond.

9. The polyurethane dispersion according to either of claims 7 and 8, wherein component a) comprises at least one compound Va) and at least one further, different polyisocyanate.

10. The polyurethane dispersion according to claim 1 comprising UV-polymerizable C=C double bonds and hydroxyl groups, synthesized from the allophanates of hexamethylene diisocyanate and hydroxyethyl acrylate and/or mixtures thereof.

11. The polyurethane dispersion according to claim 1 comprising UV-polymerizable C=C double bonds and hydroxyl groups, synthesized from aliphatic polyisocyanates comprising isocyanurate, biuret or allophanate groups, as building block a), hydroxyalkyl (meth)acrylates as building block b), aliphatic diols with a molecular weight of less than 500 g/mol as building block c), and monothio or monohydroxy carboxylic acids as building block d).

12. The polyurethane dispersion according to claim 1, comprising added reactive diluents.

13. The polyurethane dispersion according to claim 1, comprising added conventional coatings additives.

14. The polyurethane dispersion according to claim 1 containing UV-polymerizable C=C double bonds and hydroxyl groups, comprising a photoinitiator in an amount of from 0.1 to 5% by weight of its solids content.

15. The polyurethane dispersion according to any of the preceding claims, comprising at least one thermal initiator.

16. The polyurethane dispersion according to claim 15, wherein said thermal initiator has a half life at 60°C of at least one hour.

17. The polyurethane dispersion according to either of claims 15 and 16, wherein said thermal initiator comprises at least one compound having at least one isocyanate-reactive group which even after reaction with a compound containing isocyanate groups is capable of releasing free radicals under heat.

18. The polyurethane dispersion according to any of claims 15 to 17, wherein said thermal initiator comprises benzpinacol or a derivative thereof.

19. The use of the polyurethane dispersions according to any of claims 1 to 18 to coat substrates which can be coated at temperatures of up to 160°C.

20. The use of a polyurethane dispersion according to any of claims 1 to 18 to coat substrates comprising metal, wood, paper, ceramic, glass, plastic, textile, leather, nonwoven, or mineral building materials.

21. The use of a polyurethane dispersion according to any of claims 1 to 18 as or in exterior coatings, preferably of buildings or parts of buildings, road markings, or coatings on vehicles and aircraft.

22. The use of the polyurethane dispersions according to any of claims 1 to 18 as automotive clearcoats.

## Revendications

1. Dispersions de polyuréthanne aqueuses pouvant être durcies par un rayonnement UV, ainsi que thermiquement, constituées essentiellement de
a) polyisocyanates aliphatiques ayant une fonctionnalité NCO de 2 à 4,5,
b) composés ayant au moins un groupe réactif vis-à-vis de l'isocyanate, ainsi qu'au moins une double liaison C=C pouvant être polymérisée par un rayonnement UV en présence d'un photoamorceur,
c) composés aliphatiques ayant au moins deux groupes hydroxyle réagissant vis-à-vis de l'isocyanate avec un poids moléculaire inférieur à 500 g/mole,
d) composés ayant au moins un groupe réactif vis-à-vis des groupes isocyanate, ainsi qu'au moins un groupe acide carboxylique ou un groupe acide sulfonique,
e) au moins un composé basique pour une neutralisation ou une neutralisation partielle des groupes acides des composés d),
f) un agent de blocage (f1) de l'isocyanate, qui transforme les groupes isocyanate en groupes isocyanate bloqués à une température de déblocage dans la plage de 70 à 160°C, ou un additif d'un composé (f2), qui contient des groupes isocyanate bloqués, ainsi que
g) éventuellement d'autres composés différents des composés b) à f), qui présentent seulement un groupe réactif vis-à-vis de l'isocyanate, les produits de réaction de a) avec b) et éventuellement c) préparés avec un excédent stoechiométrique en groupes NCO par rapport aux groupes hydroxyle étant amenés à réagir avec des quantités de composés d) et e) suffisantes pour une dispersibilité dans un milieu aqueux, et des groupes isocyanate bloqués par réaction avec des agents (f1) de blocage de l'isocyanate étant introduits dans la molécule ou des composés (f2), qui contiennent des groupes isocyanate bloqués, étant ajoutés.

2. Dispersions de polyuréthanne selon la revendication 1, **caractérisées en ce qu'**elles contiennent des composés b) en tant qu'additif.

3. Dispersions de polyuréthanne selon la revendication 1, **caractérisées en ce qu'**elles contiennent des doubles liaisons C=C pouvant être polymérisées dans le polyuréthanne par un rayonnement UV, des groupes isocyanate bloqués et des groupes hydroxyle.

4. Dispersions de polyuréthanne selon la revendication 1, **caractérisées en ce qu'**elles contiennent des composés ayant des doubles liaisons C=C pouvant être polymérisées par un rayonnement UV et des groupes hydroxyle, ainsi que des composés ayant des groupes isocyanate bloqués.

5. Dispersions de polyuréthanne selon la revendication 1, **caractérisées en ce qu'**elles contiennent des composés ayant des doubles liaisons C=C pouvant être polymérisées par un rayonnement UV, des diols d'hydrocarbures aliphatiques incorporés par l'intermédiaire de l'isocyanate et ayant un poids moléculaire inférieur à 500 g/mole, des groupes hydroxyle libres, ainsi que des composés ayant des groupes isocyanate bloqués.

6. Dispersions de polyuréthanne selon la revendication 1, contenant des doubles liaisons C=C pouvant être polymérisées par un rayonnement UV et des groupes hydroxyle, **caractérisées en ce qu'**elles sont constituées de polyisocyanates aliphatiques contenant des groupes isocyanurate, biuret ou allophanate.

7. Dispersions de polyuréthanne selon l'une quelconque des revendications précédentes, dans lesquelles le composant a) comporte au moins un composé Va) ayant deux groupes isocyanate libres, au moins un groupe allophanate et au moins une double liaison C=C pouvant être polymérisée par voie radicalaire, un groupe carbonyle ou un atome d'oxygène de la fonction éther étant lié directement à la double liaison.

8. Dispersions de polyuréthanne selon la revendication 7, dans lesquelles le composé Va) est sélectionné parmi des composés de la formule générale I : 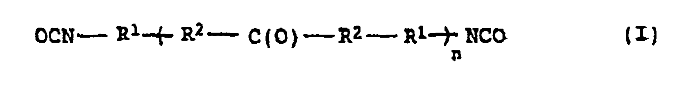 dans laquelle
n représente un nombre entier de 1 à 10,
R¹ représente une unité d'hydrocarbure en C₂ à C₂₀ alicyclique ou aliphatique bivalente ou une unité d'hydrocarbure en C₆ à C₂₀ aromatique,
R² représente dans chaque unité de répétition une fois -NH- et une fois 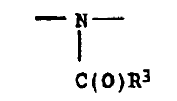 R³ représentant un radical dérivé d'un alcool A par abstraction de l'atome de H du groupe hydroxyle alcoolique, l'alcool A présentant de manière supplémentaire au moins une double liaison C=C pouvant être polymérisée par voie radicalaire, et un groupe carbonyle ou un atome d'oxygène de la liaison éther étant lié directement à la double liaison.

9. Dispersions de polyuréthanne selon la revendication 7 ou 8, dans lesquelles le composant a) comporte au moins un composé Va) et au moins un autre polyisocyanate différent de celui-ci.

10. Dispersions de polyuréthanne selon la revendication 1, contenant des doubles liaisons C=C pouvant être polymérisées par un rayonnement UV et des groupes hydroxyle, **caractérisées en ce qu'**elles sont constituées des allophanates du diisocyanate d'hexaméthylène et de l'acrylate d'hydroxyéthyle et/ou de mélanges de ceux-ci.

11. Dispersions de polyuréthanne selon la revendication 1, contenant des doubles liaisons C=C pouvant être polymérisées par un rayonnement UV et des groupes hydroxyle, **caractérisées en ce qu'**elles sont constituées de polyisocyanates aliphatiques contenant des groupes isocyanurate, biuret ou allophanate en tant qu'élément structural a), de (méth)acrylates d'hydroxyalkyle en tant qu'élément structural b), de diols aliphatiques d'un poids moléculaire inférieur à 500 g/mole en tant qu'élément structural c) et d'acides monothiocarboxyliques ou monohydroxycarboxyliques en tant qu'élément structural d).

12. Dispersions de polyuréthanne selon la revendication 1, **caractérisées en ce qu'**elles contiennent des diluants réactifs ajoutés.

13. Dispersions de polyuréthanne selon la revendication 1, **caractérisées en ce qu'**elles contiennent des additifs de peinture usuels ajoutés.

14. Dispersions de polyuréthanne selon la revendication 1 ayant des doubles liaisons C=C pouvant être polymérisées par un rayonnement UV et des groupes hydroxyle, **caractérisées en ce qu'**elles contiennent un photoamorceur en une quantité de 0,1 à 5 % en poids de leur teneur en substances solides.

15. Dispersions de polyuréthanne selon l'une quelconque des revendications précédentes, **caractérisées en ce qu'**elles contiennent au moins un amorceur thermique.

16. Dispersions de polyuréthanne selon la revendication 15, dans lesquelles l'amorceur thermique présente une demi-vie à 60°C d'au moins une heure.

17. Dispersions de polyuréthanne selon la revendication 15 ou 16, dans lesquelles l'amorceur thermique est au moins un composé ayant au moins un groupe réactif vis-à-vis des groupes isocyanate, qui est également capable, après réaction avec un composé contenant des groupes isocyanate, de libérer des radicaux de manière thermique.

18. Dispersions de polyuréthanne selon l'une quelconque des revendications 15 à 17, dans lesquelles l'amorceur thermique comporte du benzopinacol ou un dérivé de celui-ci.

19. Utilisation des dispersions de polyuréthanne selon l'une quelconque des revendications 1 à 18 pour le revêtement de substrats, qui peuvent être revêtus à des températures allant jusqu'à 160°C.

20. Utilisation d'une dispersion de polyuréthanne selon l'une quelconque des revendications 1 à 18 pour le revêtement de substrats constitués de métal, de bois, de papier, de céramique, de verre, de plastique, de textile, de cuir, de non-tissé ou de matériaux minéraux.

21. Utilisation d'une dispersion de polyuréthanne selon l'une quelconque des revendications 1 à 18 en tant que ou dans des revêtements extérieurs, de manière préférée de bâtiments ou de parties de bâtiment, des marquages routiers, des revêtements sur des véhicules et des avions.

22. Utilisation des dispersions de polyuréthanne selon l'une quelconque des revendications 1 à 18 en tant que peintures transparentes pour automobile.
